# EUROPEAN PATENT SPECIFICATION

(11) **EP 2 690 551 B1**
(45) Date of publication and mention of the grant of the patent: **03.07.2019**
(21) Application number: 12178136.3
(22) Date of filing: 26.07.2012
(51) Int. Cl.: G06F 9/48, G06F 9/50

(54) **Background service launcher for dynamic service provisioning**
Hintergrunddienststartsystem für dynamische Dienstbereitstellung
Lancement de service d'arrière-plan pour fourniture de service dynamique

(43) Date of publication of application: 29.01.2014
(73) Proprietor: 2236008 Ontario Inc., Waterloo, ON N2K 0A7 (CA)
(72) Inventor: Dodge, Danny Thomas, Kanata, Ontario K2K 0B3 (CA); Cardamore, Daniel, Kanata, Ontario K2K 0B3 (CA)
(74) Representative: MERH-IP Matias Erny Reichl Hoffmann Patentanwälte PartG mbB

(56) References cited:
- EP-A2- 0 308 805
- US-A- 5 838 916
- US-A1- 2004 030 882
- US-A1- 2006 253 858
- US-A1- 2010 138 515

## Description

### TECHNICAL FIELD

The present disclosure relates to computer operating systems and in particular to initiating of pathname addressable services in the computer operating system.

### BACKGROUND

In computer operating systems, services or daemons are typically long-running processes or executables that perform specific functions required by the operating system or applications executed by the operating system. The services can be configured to start when the operating system is started and run in the background, or they can be started manually when required. Services run in the background rather than being under the direct control of an interactive user. A client-server architecture can be implemented where programs or processes are clients that provide requests to services, to communicate with them to perform functions required by the clients. In the context of client-server architecture, a server is a service running to serve the requests of other programs, the clients. The service performs some computational task on behalf of clients or may also provide access to filesystems or devices directly or indirectly coupled to a computing device.

By using a namespace to address services, clients can access services by a single unified path namespace and interface, regardless of the configuration of the underlying filesystem, server, resource manager or device. Services can be accessed by an open operation on a pathname associated with a service, a pathname tree is used to track the services that are associated with portions of the pathname space. An adopted (e.g. associated) pathname is sometimes referred to as a "prefix" because it prefixes any pathnames that lie beneath it; prefixes can be arranged in a hierarchy called a prefix tree. The adopted pathname can also be called a mountpoint, because that is where a service mounts into the pathname. Generally the order of resolving a pathname is the order in which the services are mounted at the same mountpoint (i.e. new mounts go on top of, or in front of, any existing ones). However, in order for the client to communicate with the service, the service needs to be running and listening to receive client communications thereby utilizing system resources unnecessarily even when they are not required.

Accordingly, systems and methods that enable dynamic initiation of pathname addressable services in a in a computer operating system remains highly desirable.

US Patent Publication Number 2006/0253858 A1 of Rochetter et al. discloses a system and a method within an operating system (OS) environment, having an OS and a software application requesting a service. The invention disclosed by Rochetter et al. fulfills requested services by filtering requests and fulfilling certain types of requests in an unconventional, atypical manner. For example a service call, such as an "open call" is executed through an additional software application which is not provided by the operating system or the software application which requests the service. The additional software application provides file or object mapping information or file or object mapping services for the requested service to obtain an address or pointer from a plurality of file or object name spaces; and provides an address or address pointer from the one or more software service applications of one or more files or objects required to execute the service, and passing said address or pointer to one of the OS libraries that would have otherwise serviced that request or to the kernel in the absence of said address or pointer from the one or more software service applications.

US2004030882 (A1) describes managed application pre-launching. An operating system feature for a computing device provides the ability to perform pre-launch subroutines of application programs on the device. A pool of pre-launched application programs is maintained such that a subsequent request for a program launch is married to the already pre-start instances. Provision is also made for monitoring available computing resources, dependencies, and user preferences to optimize device use with respect to launching application programs.

### SUMMARY

In accordance with various aspects of the present disclosure, there is provided a method, a system and a computer readable memory as defined in the appended claims.

### BRIEF DESCRIPTION OF THE DRAWINGS

Further features and advantages of the present disclosure will become apparent from the following detailed description, taken in combination with the appended drawings, in which:
FIGURE 1 shows a representation of a system for providing dynamic service provisioning in a computing device;
FIGURE 2 shows a representation of message flow for dynamic service provisioning;
FIGURE 3 shows a state diagram of operation of dynamic service provisioning;
FIGURE 4 shows a method flow of a background service launcher for dynamic service provisioning; and
FIGURE 5 shows a method flow of dynamic service provisioning.

It will be noted that throughout the appended drawings, like features are identified by like reference numerals.

### DETAILED DESCRIPTION

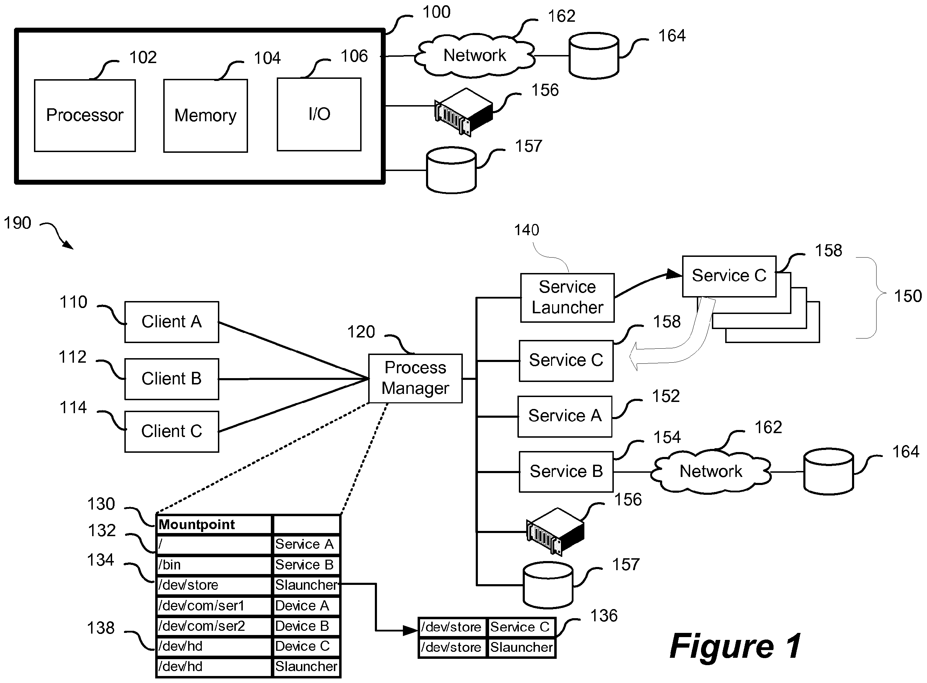

Embodiments are described below, by way of example only, with reference to Figures 1-5. It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

In a namespace based operating system, each service may adopt a portion of the pathname space, called a mountpoint, and provides services through an application programming interface (API) (supporting operations such as open(), close(), read(), write(), Iseek(), etc.) such as, for example, the standard Portable Operating System Interface (POSIX). A service may process operations directed to a mountpoint and manage the directory structure below it. By utilizing pathname addressing of services, clients can seamlessly locate and connect to any service (server, filesystem, resource manager or device) that has been registered with a process manager. Applications may be presented with a single unified pathname space and interface, regardless of the configuration and number of underlying services. When a service registers a mountpoint, the process manager creates an entry in an internal mount table or pathname table for that mountpoint and a corresponding service ID. When a pathname is resolved, the process manager may contact each of the services that have registered a mountpoint corresponding to some component of that pathname. However in order to be associated with a pathname the service must be running and registered against the pathname.

A background service launcher can be associated by a mountpoint with one or more pathnames in a namespace. Services that are associated with the pathnames can be started dynamically by the background service launcher as needed rather than being started at start-up of the operating system or requiring manual initiation. For example, when a client tries to open a pathname having an associated service, if the service is running the service will receive the open request immediately. However when the service is not running the background service launcher will have a mountpoint associated with the pathname and will then receive the open request from the client. The background service launcher will then start the associated service, and then redirect the client to the service, or direct the client to re-generate the open request which will then be directed to the running service.

The background service launcher enables services to be started on an as needed basis, for example by automatically mounting a filesystem as files are requested by a client, thereby saving the system resources to an as needed basis. The ability to launch services as required enables resources to be accessed such as, for example, cloud based filesystems by being dynamically mounted and accessible to clients of the operating system. The background service launcher mitigates the need for special mounting commands to be made by clients to access services when the services are not running, or require the client or process manager to be aware of the operating state of the service.

A namespace resolution order of pathnames is leveraged by the background service launcher as multiple services can be registered against the same pathname. Services can register mountpoints in a relative order against a pathname. A service that is registered first in the order against a pathname will receive a request before services registered lower in the namespace resolution order. That is, one service may be defined as being in front of another service, or in back of another service for the same mountpoint. The background service launcher utilizes the namespace resolution order by attaching itself to the back of the namespace resolution order for a mountpoint that is to be associated with a particular service. When a client requests to open a pathname (or other similar pathname operation) where the service is not started, and has not associated a mountpoint, the background service launcher will receive the open request and dynamically start the service. However, the service can then register against the mountpoint in front of the background service launcher, once it is started, therefore, if the service is running it will receive open requests (open()), and if the service is not running then the background service launcher will receive the open requests. Once the service is started the client can then be instructed to re-generate the open request and connect to the service seamlessly.

Figure 1 shows a representation of a system 190 for providing a dynamic service provisioning. A computing device 100, comprises at least a processor 102, memory 104 and an input/output (I/O) interface 106 used for providing all or portions of the system 190. The memory 104 contains instructions for execution by the processor 102 providing an operating system using namespace resolution for addressing services provided by the operating system. Clients can access services by providing requests to a process manager 120 that will direct the request to the appropriate service. For example, client A 110, client B 112, or client C 114 access a service A 152, service B 154, service C 158, device 156 or filesystem 157 by making an open request to the process manager 120. If the service requested is currently started, or running, for example service B 154, the open request is received by the process manager 120 and provided to the service B 154. In this example service B 154 may be a resource manager that provides an interface to network based filesystem 164, such as a cloud based filesystem, via a network 162 accessible by I/O interface 106. The service B 154 may be always running on the computing device 100, once started, and available when a client requests access to the network storage, however, access to the service may not always be required therefore unnecessarily consuming system resources. The process manager may be any capability of system 190 that provides for detecting pathname requests from a client 110, 1122 and 114 and associating each request with one or more services 152, 154, 156, 157 and 158 or the service launcher 140.

By providing dynamic access to services that can be started on an as needed basis, a background service launcher 140 can be associated with mountpoints of one or more services, for example services 150, until they are required. For example service C 158, may not be currently running when client A 110 requests access to the service C 158 (e.g. by making a pathname request where a portion of the pathname matches a mountpoint normally associated with service C 158). The process manager 120, which provides pathname management of the mountpoints into which services attach, maintains a pathname table 130 to identify pathnames and the associated services. For example prefix '/' is mounted as a root pathname 'and is associated with Service A 152, '/bin' is associated with Service B 154, '/dev/store' is associated with the background service launcher 140, '/dev/com/ser1' is associated with a device or a resource manager representation of the device. It should be understood that a service may be a filesystem, server, device or a resource manager that provides access to a filesystem, server or device locally or remotely from the computing device 100. The process manager 120 directs requests for services based upon the pathname and the associated mountpoint of a service. For services that are required on-demand or dynamically, the background service launcher 140 has a mountpoint associated with the respective pathname. For example the background service launcher 140 is associated in the pathname table 130 with pathname '/dev/store' 134, when the service C 158 is not running and any requests to that pathname will be directed to the background service launcher 140. The prefix tree of the mountpoints defined in the pathname table 130 may contain identical or partially overlapping regions of authority, that is multiple servers can register the same prefix or root prefixes. For example both Device A and Device B have the '/dev/com' prefix however the determination of the service that is to be associated with the pathname is performed by matching of the rest of the pathnames '/ser1' or /ser2' to a received pathname. In addition, if a pathname requested by a client is longer than mountpoints defined in the pathname table, the request can be provided to the service having the longest match relative to the prefixes, for example '/dev/com/ser1/output' can still be directed to a Device A as it has the closest pathname even though the mountpoint is not defined against the prefix '/output'. In addition if the regions defined by the pathname are identical, the order of resolution can be specified, for example '/dev/hd' 138 is associated with both a Device C and the background service launcher 140 but Device C will receive the request before the background service launcher 140.

When an open request is received by from client A 110 by the process manager 120 to access the pathname '/dev/store', the process manager 120 determines which service has a mountpoint associated with the pathname. When service C 158 is not running the background service launcher 140 will have the only mountpoint against the pathname. The request from the client A 110 is forwarded, or re-directed, to the background service launcher 140. The background service launcher 140 then determines the process associated with the pathname from a configuration file, or table look up, and will then start the service C 158 associated with the pathname. When the service C 158 is started it registers 136 against the pathname in the pathname table 130, before the entry for background service launcher 140. Once the background service launcher 140 has received confirmation that the service C 158 has started, the open request can be forwarded to the service C 158, or re-generated by the client 110. Any future requests to the pathname, while the service C 158 is running, will be directed to the service C 158 based upon the mountpoint in the pathname table entry. If the service C 158 is stopped, or terminated, it would be removed from the pathname table 130 and the background service launcher 140 would continue to be associated with the mountpoint. The process manager 120 may remove service C 158 from the pathname table 130 upon termination. The background service launcher 140 provides a representation for multiple processes enabling on-demand activation of services while not wasting resources when they are not required.

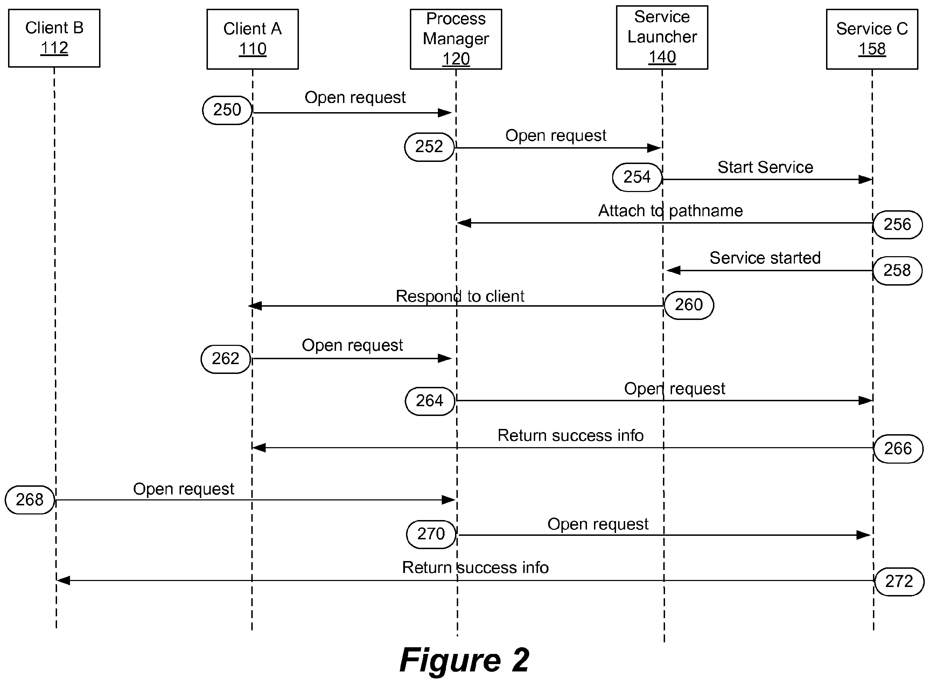

Figure 2 shows a representation of message flow for dynamic service provisioning. Client A 110, such as an application, process, or another service, makes an open path request (250), for example 'open(/dev/store/)'. The request is handled, for example, by a process manager 120. Process manager 120 determines that the background service launcher 140 is associated with the pathname '/dev/store/' and forwards the request (252), as no other service has registered a mountpoint against the pathname. The background service launcher 140 determines the service C 158 is associated with the pathname and starts the service C 158 (254). The background service launcher 140 may use any mechanism provided by the system 190 to cause service C 158 to be started. The service C 158 attaches a mountpoint to the pathname '/dev/store/' by registering in front of the background service launcher 140 mountpoint in the pathname table 130. The background service launcher 140 receives confirmation that the service C 158 has started (258) either by confirmation from the service C 158 itself, by the process manager 120 providing an indication that the service has started, by determining that the service C 158 has registered a mountpoint against the pathname, for example by polling the pathname table 130, or using other similar mechanisms.

The background service launcher 140 responds to the client A 110 (260) to instruct the client A 110 to re-initiate the open request to the pathname (262). The response may for example be a symbolic link (symlink or soft link) which may be the same pathname as originally provided, but will trigger the client 110 to re-generate the open request. The symbolic link typically contains a reference to another file or directory to redirect a request that affects pathname resolution; however the symbolic link provided by the background service launcher 140 would refer to the same pathname as provided in the original open request. In another embodiment, the background service launcher 140 may respond with a flag that will the trigger the client 110 to re-generate the open request. Alternatively, the re-initiation of the open request can be implemented to be transparent to the client by, for example, having the re-generation occur in the implementation of open() function invoked by the client.

The process manager 120 receives the subsequent open pathname request and generates an open request (264) to the service C 158 (264) based on the added mountpoint 136 to the pathname table 130. The service C 158 can then return confirmation that the open request, or connection, is successful (266) back to the client A 110 and provide services requested by the client 110. Once the service C 158 is running, a subsequent open request (268) from client A 110, or another client B 112, will be directed from the process manager 120 directly to the service C 158 (270) as it has a mountpoint in the pathname table 130 before the background service launcher 140. The service C 158 can then return confirmation (272) back to the client B 112 and provide services required by the client B 112. It should be noted that during communication the open requests generated by the client A 110 and responses from the background service launcher 140 and service C 158 may be processed through the process manager 120. Alternatively replies may be sent directly from the background service launcher 140 and service C 158 to the client A 110.

Further open requests (not illustrated) that occur between open request (250) and open request (262) that the process manager 120 determines to be associated with the pathname registered by the service launcher 140 may be forwarded to the background service launcher 140. The background service launcher 140 may queue the further open requests until confirmation that the service has started is received (258). The queued open requests may then be processed in a manner similar to that described for processing the pending open request (250). In order to mitigate the mishandling of open requests received between when the service launcher 140 initiates the start of service (254) and when confirmation of the start of service is received (258), the background service launcher 140 may optionally arrange with the process manager 120 to have the pathname associated with the background service launcher 140 to be registered in front of (or both in front of and behind) the pathname registered by Service C 158. Once confirmation that the service has started (258) has been received, the background service launcher 140 may arrange with the process manager 120 to have the pathname associated with the service launcher 140 to be registered only behind the pathname registered by Service C 158. The determination that the service has started (258) may include determining that the service has been launched, that it has successfully registered a pathname with the process manager 120, that the service and pathname are authorized or otherwise authenticated by the system and other similar determinations to ensure that the service is operational.

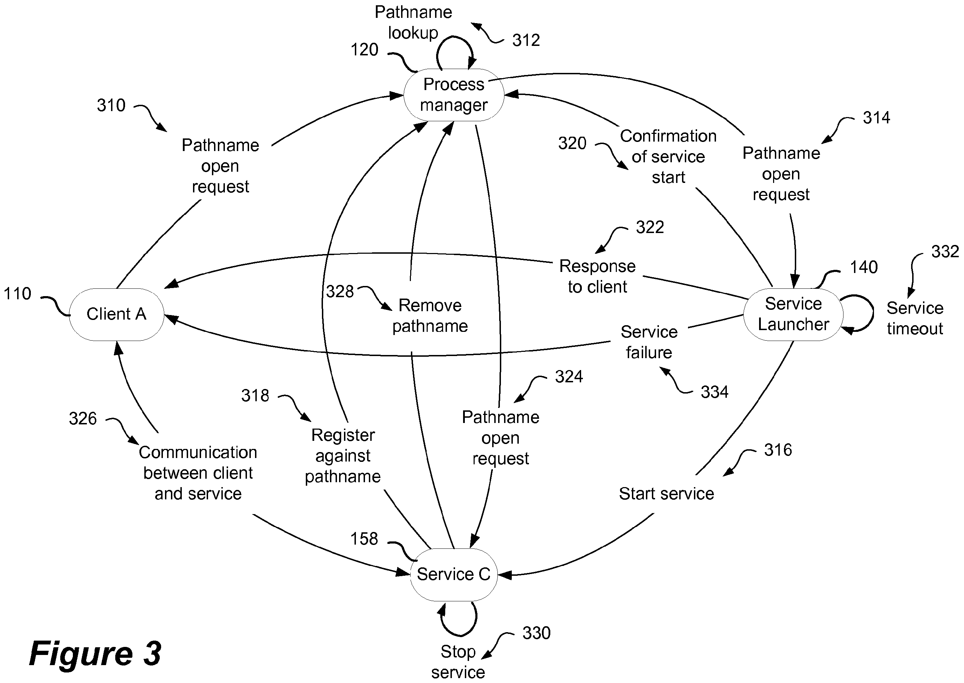

Figure 3 shows a state diagram of operation of dynamic service provisioning. The client A 110 generates an open request to a pathname which should be associated with a mountpoint for the service C 158 (310), for example an open() or opendir(). The process manager 120 determines which service is associated with the pathname (312) by a pathname look-up in a pathname table 130. As the service C 158 is not running, and therefore does not have a registered mountpoint against the pathname, the open request is directed to the background service launcher 140 by the process manager 120 (314) as the background service launcher 140 has registered a mountpoint against the pathname associated with the open request. The background service launcher 140 then determines the service associated with the pathname, through table lookup or configuration file, and starts service C 158 (316). When service C 158 starts successfully, it registers a mountpoint against the associated pathname with the process manager 120 in the pathname table 130, before the entry for the background service launcher 140 (318). The background service launcher 140 waits to receive confirmation that the service C 158 has registered a mountpoint for the pathname requested by the service C 158 (320). The background service launcher 140 may either by polling the process manager 120, receive an indication from the process manger 120 that the service C 158 has started or receive confirmation directly from service C 158 once it has started to determine that the service C 158 has successfully registered a mountpoint for the pathname. The background service launcher 140 can then respond to the client A 110 to re-generate an open request, such as by providing a symbolic link to the client A 110 or providing a flag to trigger re-generation of the open request (322). The response from the background service launcher 140 to the client A 110 may be processed through the process manager 120 to respond to the initial open request from client A 110.

The client A 110 will then re-generate the open request (310), however the service C 158 will be now have a mountpoint 136 in the pathname table 130 before the background service launcher 140 entry, and the open request will therefore be directed to the service C 158 (324). The service C 158 then proceeds with communication with the client A 110 (326). When communication between the client A 110 and the service C 158 is completed the service C 158 may be terminated (330) and the pathname removed from the pathname table 130 (328). Alternatively the pathname may be removed by the process manager 120 as part of a cleanup operation, for example by notification from a service that it is no longer required, or if a service unexpectedly terminates. Subsequent open requests (310) will then be directed to the background service launcher 140 based upon the order in the pathname table 130.

When the background service launcher 140 is starting the service C 158 (316), and the associated pathname is not successfully registered with the process manager 120, a timeout may occur (332) before the background service launcher 140 receive confirmation. If a timeout occurs and the service C 158 has not successfully registered against the pathname, the client A 110 will be advised of the failure with an error message (334) which may be processed or relayed through the process manager 120. In addition, if subsequent requests are received to start the service C 158 by the service launcher 140, either from the client A 110, or other clients requiring access to the service C 158, the requests will be buffered until the service C 158 is successfully started, or a timeout has occurred.

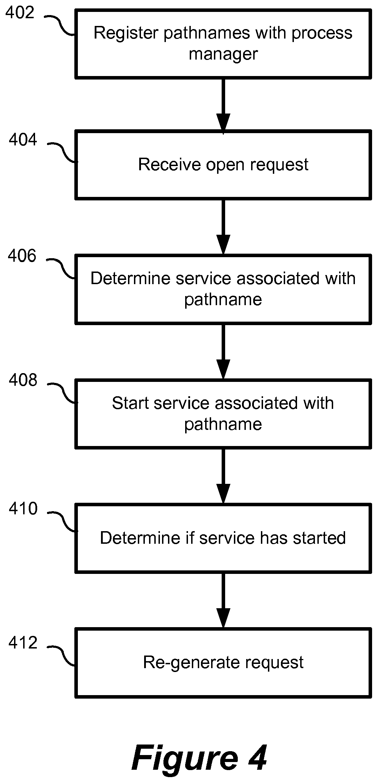

Figure 4 shows a method flow of a background service launcher for dynamic service provisioning. The background service launcher 140 registers one or more pathnames with the process manager 120, each of the one or more pathnames based on entries in a configuration files or a table look-up associated with the background service launcher 140 (402). Each of the pathname entries are defined for a service that is to be started dynamically by the background service launcher 140. The background service launcher 140 receives an open request from a process manager 120 which originated from a client (404). The process manager 120 forwards the request to the background service launcher 140 when the background service launcher 140 is the first mountpoint registered against the pathname in a pathname table 130. The background service launcher 140 then determines the service associated with the pathname (406) by a configuration file or table lookup and starts the associated service (408). In order to receive open pathname requests the service must register a mountpoint with the process manager 120 against the pathname. The background service launcher 140 needs to determine that the service has successfully started (410) when the service has registered a mountpoint against the pathname before the background service launcher 140 to ensure that open requests will be directed to the service. Alternatively, the background service launcher 140 may receive confirmation from the service that the process has successfully started and registered or it may receive an indication from the process manager 120 that the process has successfully started. Once the process has successfully started the open request can be re-generated by the background service launcher 140 (412). For example the background service launcher 140 can respond to the client with a symbolic link identifying the same pathname that the client requested or provide a flag or other indication to the client . The client will re-initiate the open pathname request which will then be directed to the started service. The background service launcher 140 may also have a timeout value when starting the service in which it must receive confirmation that the service has started otherwise a failure message can be provided to the client.

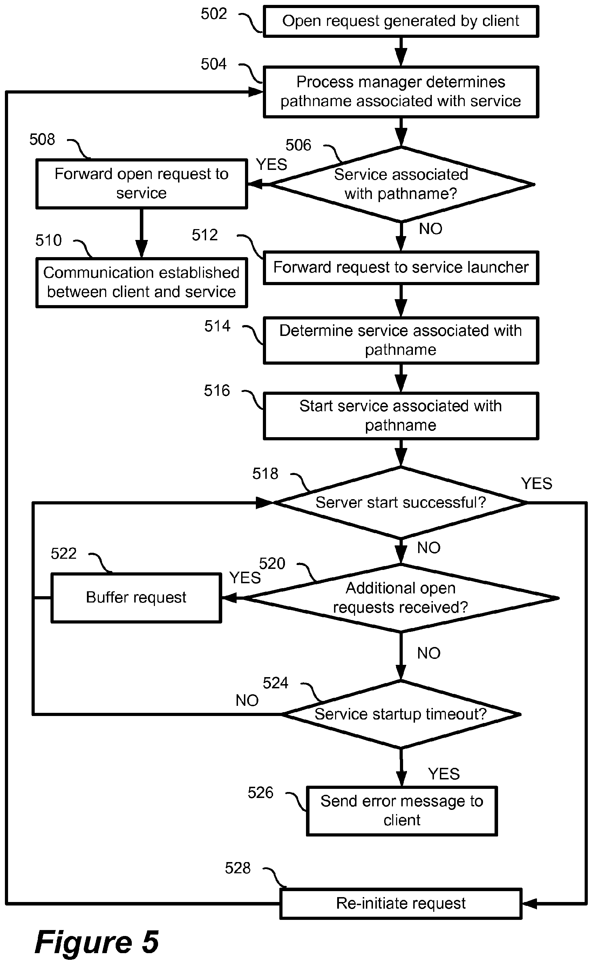

Figure 5 shows a method flow of dynamic service provisioning. A client generates an open request based upon a pathname (502) which is provided to a process manager of the operating system. The process manager 120 determines the service associated with the pathname (504) by a look-up in a pathname table 130. The association of the background service launcher 140 with one or more pathnames in the pathname table 130 is performed when the background service launcher is initiated. The services and the associated pathnames may be determined by the background service launcher 140 from a table look-up or a configuration file on start-up and utilized to determine the entries that should be registered in the pathname table 130. The pathname generated by a client is resolved by the process manager 120 based upon services that have registered a mountpoint against the pathname. If there is a service associated with the pathname (YES at 506), the open request is forwarded to the service (508) and communication is established between the client and the service (510). If a service is not associated with the pathname (NO at 506), a background service launcher 140, which may in of itself be considered a service, is forwarded the open request (512) when it has a mountpoint registered in the pathname table 130 against the request pathname. The background service launcher 140 determines the service that should be associated with the pathname (514) and starts the service (516).

When the service is started it registers a mountpoint against a pathname in the pathname table 130 before the entry for the background service launcher 140. The background service launcher 140 can then determine if the service is started (518) either by determining successful registration of the mountpoint or by communication from the service or process manager 120. If the service has successfully started (YES at 518) the open request can be re-generated by the client (528), by for example the background service launcher 140 providing a symbolic link or flag to the client. The process manager 120 would receive the subsequent open request (504) from the client and would determine that the service that is now registered a mountpoint against the pathname (YES at 506). The open request would then be forwarded to the service (508) and communication between the client and service would be established (510).

While the service is starting up (NO at 518), if additional requests to open the pathname are received either from the same client or other clients prior to the background service launcher 140 receiving confirmation that the service has started, (YES at 520) the open requests are buffered (522) and responded to when once the service is successfully started (528) or sent a error message (526) when a timeout occurs (YES at 524) for starting the service. If no additional requests are received (NO at 520), the background service launcher 140 will continue waiting for confirmation that the service has started until the time period expires (YES at 524) and an error message will be sent to requesting clients. If the service successfully registers a mountpoint before the timeout expires (NO at 524) and (YES at 518) the clients that have initiated open requests for the pathname are instructed to re-generate the open requests.

The background service launcher has been described as a service operating independently of the process manager for clarity, however the functions of the background service launcher may be incorporated into a process manager or another operating system service, process or function which provides service or process management functions or subset thereof. In an alternative embodiment, rather than having to add or remove mountpoints for a service registered against a pathname when the service is not running, the namespace resolution order in the pathname table may be utilized by changing the mounting order of a service relative to the background service launcher. For example if a service is stopped the service may still have a mountpoint in the pathname table but it may be defined as occurring after the background service launcher. Once the service is started it would be changed to having a mountpoint in front of the background service launcher. In addition if the pathname table is used in this manner the background service launcher may determine associated services by looking in the pathname table to determine which service occurs after its mountpoint entry rather than requiring a configuration file or separate table to determine services associated with particular pathnames.

Although certain methods, apparatus, computer readable memory, and articles of manufacture have been described herein, the scope of coverage of this disclosure is not limited thereto. To the contrary, this disclosure covers all methods, apparatus, computer readable memory, and articles of manufacture falling within the scope of the appended claims.

Although the following discloses example methods, system and apparatus including, among other components, software executed on hardware, it should be noted that such methods, system and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods, system and apparatus.

## Claims

1. A method of providing a background service launcher (140) for dynamic service provisioning on a computing device, the method comprising:
receiving (404), from a client, an open request comprising a pathname, the pathname associated with a service;
determining (406) the service (158) associated with the pathname;
**characterised by** starting (408) the determined service (158); and
re-generating (412) the open request to the determined service (158), by replying to the client with a symbolic link identifying the pathname or with a flag, and the client re-generating the open request to the service associated with the pathname when receiving the symbolic link or the flag.

2. The method of claim 1 further comprising determining that the service associated with the pathname is not running and wherein starting the service is responsive to determining that the service is not running.

3. The method of claim 1 or 2 further comprising determining if the service has successfully started prior to re-generating the open request.

4. The method of claim 3 wherein if subsequent open requests comprising the pathname are received by the background service launcher, prior to determining if the service has successfully started, the subsequent requests are queued by the background service launcher.

5. The method of claim 3 or claim 4 wherein to determine if the service has successfully started, the background service launcher monitors a pathname table to determine that the service has registered a mountpoint against the pathname associated with the service.

6. The method of claim 3 or claim 4 wherein to determine if the service has successfully started, the background service launcher receives confirmation from the service that it has registered against the pathname.

7. The method of any one of claims 1 to 6 wherein the open request is received from a process manager having a pathname table, wherein services register mountpoints against pathnames in the pathname table such that the process manager can direct requests to the associated service.

8. The method of claim 7 wherein each pathname may have more than one service having an associated mountpoint, wherein when starting the determined service, the service registers a mountpoint in the pathname table in front of the background service launcher mountpoint for the pathname, wherein subsequent requests on the pathname will be directed to the determined service based upon the namespace resolution order.

9. The method of any one of claims 1 to 8 wherein the service is associated with a filesystem, or a resource manager representing a file system, the pathname defining a mountpoint into the filesystem.

10. A system (100) comprising:
a memory (104) containing instructions for providing a dynamic service provisioning;
a processor (102) for executing the instructions for providing the steps of the method of any one of claims 1 to 9.

11. The system of claim 10 wherein the processor is coupled to an input/output interface (106), wherein the determined service provides a resource manager for representing a filesystem of a network-based (162) storage (164) accessible through the input/output interface (106).

12. The system of claim 11 wherein starting the determined service connects to the network-based storage.

13. A computer readable memory (104) containing instructions for a method of providing a background service launcher, the instructions when executed by a processor (102) causing the processor (102) to perform the method of any one of claims 1 to 9.

## Patentansprüche

1. Verfahren zum Vorsehen eines Hintergrunddienststartsystems (140) für dynamische Dienstbereitstellung auf einem Rechengerät, das Verfahren umfassend:
Empfangen (404), von einem Client, einer Öffnen-Anforderung, die einen Pfadnamen umfasst, wobei der Pfadname mit einem Dienst assoziiert ist;
Bestimmen (406) des Diensts (158), der mit dem Pfadnamen assoziiert ist;
**gekennzeichnet durch**
Starten (408) des bestimmten Diensts (158); und
Neuerstellen (412) der Öffnen-Anforderung an den bestimmten Dienst (158) durch Antworten auf den Client mit einem symbolischen Link, der den Pfadnamen identifiziert, oder mit einem Flag, und wobei der Client die Öffnen-Anforderung an den Dienst, der mit dem Pfadnamen assoziiert ist, neu erstellt, wenn er den symbolischen Link oder das Flag empfängt.

2. Verfahren nach Anspruch 1, ferner umfassend das Bestimmen, dass der Dienst, der mit dem Pfadnamen assoziiert ist, nicht läuft, und wobei das Starten des Diensts in Reaktion auf das Bestimmen, dass der Dienst nicht läuft, erfolgt.

3. Verfahren nach einem der Ansprüche 1 oder 2, ferner umfassend das Bestimmen, ob der Dienst erfolgreich gestartet ist, vor dem Neuerstellen der Öffnen-Anforderung.

4. Verfahren nach Anspruch 3, wobei, wenn nachfolgende Öffnen-Anforderungen, die den Pfadnamen umfassen, durch das Hintergrunddienststartsystem empfangen werden, vor dem Bestimmen, ob der Dienst erfolgreich gestartet ist, die nachfolgenden Anforderungen durch das Hintergrunddienststartsystem in eine Warteschlange eingereiht werden.

5. Verfahren nach einem der Ansprüche 3 oder 4, wobei zum Bestimmen, ob der Dienst erfolgreich gestartet ist, das Hintergrunddienststartsystem eine Pfadnamentabelle überwacht, um zu bestimmen, dass der Dienst einen Einhängepunkt an den Pfadnamen, der mit dem Dienst assoziiert ist, registriert hat.

6. Verfahren nach einem der Ansprüche 3 oder 4, wobei zum Bestimmen, ob der Dienst erfolgreich gestartet ist, das Hintergrunddienststartsystem eine Bestätigung von dem Dienst empfängt, dass er sich am Pfadnamen registriert hat.

7. Verfahren nach einem der Ansprüche 1 bis 6, wobei die Öffnen-Anforderung von einem Prozessmanager empfangen wird, der eine Pfadnamentabelle aufweist, wobei Dienste Einhängepunkte an Pfadnamen in der Pfadnamentabelle registrieren, sodass der Prozessmanager Anforderungen an den assoziierten Dienst leiten kann.

8. Verfahren nach Anspruch 7, wobei jeder Pfadname mehr als einen Dienst mit einem assoziierten Einhängepunkt aufweisen kann, wobei, wenn der bestimmte Dienst gestartet wird, der Dienst einen Einhängepunkt in der Pfadnamentabelle vor dem Hintergrunddienststartsystem-Einhängepunkt für den Pfadnamen registriert, wobei nachfolgende Anforderungen an den Pfadnamen basierend auf der Namensraumauflösungsreihenfolge an den bestimmten Dienst geleitet werden.

9. Verfahren nach einem der Ansprüche 1 bis 8, wobei der Dienst mit einem Dateisystem, oder einem Ressourcenmanager, der ein Dateisystem repräsentiert, assoziiert ist, wobei der Pfadname einen Einhängepunkt in das Dateisystem definiert.

10. System (100), umfassend:
einen Speicher (104), der Anweisungen zum Vorsehen einer dynamischen Dienstbereitstellung enthält;
einen Prozessor (102) zum Ausführen der Anweisungen zum Vorsehen der Schritte des Verfahrens nach einem der Ansprüche 1 bis 9.

11. System nach Anspruch 10, wobei der Prozessor an eine Ein-/Ausgabe-Schnittstelle (106) gekoppelt ist, wobei der bestimmte Dienst einen Ressourcenmanager zum Repräsentieren eines Dateisystems eines netzwerkbasierten (162) Speichers (164) vorsieht, der über die Ein-/Ausgabe-Schnittstelle (106) zugänglich ist.

12. System nach Anspruch 11, wobei das Starten des bestimmten Diensts mit dem netzwerkbasierten Speicher verbindet.

13. Maschinenlesbarer Speicher (104), der Anweisungen für ein Verfahren zum Vorsehen eines Hintergrunddienststartsystems enthält, wobei die Anweisungen, wenn sie durch einen Prozessor (102) ausgeführt werden, bewirken, dass der Prozessor (102) das Verfahren nach einem der Ansprüche 1 bis 9 ausführt.

## Revendications

1. Procédé de fourniture d'un lanceur de service d'arrière-plan (140) pour l'approvisionnement de service dynamique sur un dispositif informatique, le procédé comprenant les étapes consistant à :
recevoir (404), en provenance d'un client, une demande d'ouverture comprenant un nom de chemin, le nom de chemin étant associé à un service ;
déterminer (406) le service (158) associé au nom de chemin ;
**caractérisé par** les étapes consistant à démarrer (408) le service déterminé (158) ; et
re-générer (412) la demande d'ouverture au service déterminé (158), en répondant au client avec un lien symbolique identifiant le nom de chemin ou avec un drapeau, et le client re-générant la demande d'ouverture au service associé au nom de chemin lors de la réception du lien symbolique ou du drapeau.

2. Procédé selon la revendication 1, comprenant en outre la détermination que le service associé au nom de chemin n'est pas en cours d'exécution et dans lequel le démarrage du service est sensible à la détermination que le service n'est pas en cours d'exécution.

3. Procédé selon la revendication 1 ou 2, comprenant en outre la détermination quant à savoir si le service a démarré avec succès avant la re-génération de la demande d'ouverture.

4. Procédé selon la revendication 3, dans lequel si des demandes d'ouverture subséquentes comprenant le nom de chemin sont reçues par le lanceur de service d'arrière-plan, avant la détermination quant à savoir si le service a démarré avec succès, les demandes subséquentes sont mises en file d'attente par le lanceur de service d'arrière-plan.

5. Procédé selon la revendication 3 ou la revendication 4, dans lequel pour déterminer si le service a démarré avec succès, le lanceur de service d'arrière-plan surveille une table de noms de chemin afin de déterminer que le service a enregistré un point de montage contre le nom de chemin associé au service.

6. Procédé selon la revendication 3 ou la revendication 4, dans lequel pour déterminer si le service a démarré avec succès, le lanceur de service d'arrière-plan reçoit une confirmation du service qu'il a enregistré contre le nom de chemin.

7. Procédé selon l'une quelconque des revendications 1 à 6, dans lequel la demande d'ouverture est reçue d'un gestionnaire de processus ayant une table de noms de chemin, dans lequel des services enregistrent des points de montage contre des noms de chemin dans la table de noms de chemin de sorte que le gestionnaire de processus puisse diriger des demandes vers le service associé.

8. Procédé selon la revendication 7, dans lequel chaque nom de chemin peut avoir plus d'un service ayant un point de montage associé, dans lequel lors du démarrage du service déterminé, le service enregistre un point de montage dans la table de noms de chemin devant le point de montage du lanceur de service d'arrière-plan pour le nom de chemin, dans lequel des demandes subséquentes sur le nom de chemin seront dirigées vers le service déterminé sur la base de l'ordre de résolution d'espace de noms.

9. Procédé selon l'une quelconque des revendications 1 à 8, dans lequel le service est associé à un système de fichiers, ou à un gestionnaire de ressources représentant un système de fichiers, le nom de chemin définissant un point de montage dans le système de fichiers.

10. Système (100) comprenant :
une mémoire (104) contenant des instructions pour fournir un approvisionnement de service dynamique ;
un processeur (102) pour exécuter les instructions pour fournir les étapes du procédé selon l'une quelconque des revendications 1 à 9.

11. Système selon la revendication 10, dans lequel le processeur est couplé à une interface d'entrée/sortie (106), dans lequel le service déterminé fournit un gestionnaire de ressources pour représenter un système de fichiers d'un stockage (164) basé sur le réseau (162) accessible par l'intermédiaire de l'interface d'entrée/sortie (106) .

12. Système selon la revendication 11, dans lequel le démarrage du service déterminé se connecte au stockage basé sur le réseau.

13. Mémoire lisible par ordinateur (104) contenant des instructions pour un procédé de fourniture d'un lanceur de service d'arrière-plan, les instructions, lorsqu'elles sont exécutées par un processeur (102), amenant le processeur (102) à effectuer le procédé selon l'une quelconque des revendications 1 à 9.
